# EUROPEAN PATENT SPECIFICATION

(11) **EP 4 273 701 B1**
(45) Date of publication and mention of the grant of the patent: **12.11.2025**
(21) Application number: 22171118.7
(22) Date of filing: 02.05.2022
(51) Int. Cl.: G06F 11/3668

(54) **A METHOD FOR VALIDATING AN UPGRADED VERSION OF WIND TURBINE CONTROL SOFTWARE**
VERFAHREN ZUR VALIDIERUNG EINER VERBESSERTEN VERSION EINER WINDTURBINENSTEUERUNGSSOFTWARE
PROCÉDÉ DE VALIDATION D'UNE VERSION MISE À JOUR DE LOGICIEL DE COMMANDE D'ÉOLIENNE

(43) Date of publication of application: 08.11.2023
(73) Proprietor: VESTAS WIND SYSTEMS A/S, 8200 Aarhus N (DK)
(72) Inventor: Kjærgaard, Jacob Barsøe, Hinnerup (DK); Reimer, Anders, Hadsten (DK); Christensen, Leif Svinth, Thorsø (DK)
(74) Representative: Vestas Patents Department

(56) References cited:
- US-A1- 2015 082 280
- US-A1- 2019 146 755
- US-B1- 9 996 454

## Description

### FIELD OF THE INVENTION

The present invention relates to a method for validating a version of wind turbine control software, such as an upgraded version of the wind turbine control software. The method according to the invention allows a new version of the wind turbine control software to be validated without disabling a previous version of the wind turbine control software, and thereby essentially without downtime of the wind turbine or wind turbines involved.

### BACKGROUND OF THE INVENTION

In the software industry, it is common to update software running on appliances, devices or other kinds of hardware, e.g. in order to provide bug fixes, implement new features, improve performance of the software, etc. Such updates may be provided to users of the software by pushing the new version to the hardware having the software running thereon, and possibly requesting a user to install the update. For most purposes, such new versions of software need not be validated, e.g. in order to demonstrate that the software fulfils certain requirements, such as legal requirements or contractual requirements, or that the software behaves in a manner which is consistent with a certification.

However, for software which forms part of critical infrastructure, or which has an impact on the physical world which may introduce health risks or similar, a new version of the software needs to be validated before it is allowed to replace a previous version of the software. This is, e.g., the case for control software for wind turbines.

Previously, validation of new versions of wind turbine control software may have been performed by means of traditional A-B testing, in which the new version of the software is installed on some wind turbines, while the previous version of the software remains running on other wind turbines. The performance of the software versions can then be compared by comparing the performance of the two groups of wind turbines. However, this introduces a risk that, during the test period, the wind turbines having the new version of the software running thereon perform sub-optimally, or operate in an unexpected manner, and they may even operate in a manner which is not in accordance with a certification of the software. Furthermore, the performance of the software versions may not be directly comparable, since the operating conditions of the wind turbines involved may not be identical. Finally, this approach requires a significant amount of manual handling.

As an alternative, validation of a new version of wind turbine control software may apply a digital twin of the wind turbine or wind farm having the software running thereon. However, this approach is model-based, and it may therefore not take all possible conditions of the real setup into account.

US 2020/0293300 A1 discloses a method of estimating a parameter relating to an upgrade of a wind turbine software. The method comprises toggling the wind turbine alternatingly between two modes, where the upgrade is implemented in one but not the other. Data is collected during the toggling, and data related to the two modes is compared.

Document US 2015/082280 relates to a method comprising: automatically testing, by a computer test system, a latest version of software under test and one or more previous versions of the software, results of the automatic testing being generated using a data feed identical to both the latest version of software under test and to the one or more previous versions of the software, the one or more previous versions of software having been positively tested before the present automatic testing; comparing, using a predetermined criterion, the results of the automatic testing of the latest version of the software under test with further results of the automatic testing of the one or more previous versions of the software; and determining whether the latest version of software under test is positively tested based on said comparison. Automatic testing of the latest version of software under test and one or more previous versions of the software are performed in real time or near real time.

Furthermore, document US 2019/146755 discloses a method for controlling a parallel testing process by selecting test data for inclusion into a sample dataset, processing the test data included in the sample dataset through a legacy application and a new target application, storing the output results from the legacy application and the new target application using a reporting database, comparing the output results to detect differences, determining whether any of the differences are directed to defect issues in the new target application or acceptable/planned differences, and reporting identified defect issues directed to one or more resources associated with fixing defect issues.

Furthermore, document US 9 996 454 discloses a method of testing an application under test using testing software including creating via the testing software a testcase. Creating the testcase includes executing the application under test under normal usage, and the normal usage is defined as operating the application under test for its intended purpose. The normal usage is not part of the testing. Creating the testcase includes capturing artifacts related to running the application under test under the normal usage, and the artifacts include an input artifact to the application under test and an output artifact resulting from executing the application under test. Also, the method includes executing via the testing software the testcase by re-executing the application under test using the input artifact previously captured in the artifacts of the testcase in order to obtain a new output artifact. Further, the method includes verifying via the testing software the new output artifact resulting from execution of the testcase by comparing the output artifact previously captured in the artifacts from executing the application under test under the normal usage to the new output artifact from executing the testcase.

All of the prior art methods described above are cumbersome and potentially expensive. Therefore upgraded versions of wind turbine control software may only be implemented if they are critical or provide significant improvements.

### DESCRIPTION OF THE INVENTION

It is an object of embodiments of the invention to provide a method for validating a version of wind turbine control software, in which reliable validation is obtained.

It is a further object of embodiments of the invention to provide a method for validating a version of wind turbine control software, which can be performed under real operating conditions without production loss at the wind turbine or wind turbines.

It is an even further object of embodiments of the invention to provide a method for validating a version of wind turbine control software, which requires no, or only limited, manual handling.

The invention is defined in the appended independent claim. Further embodiments are defined in the thereupon dependent claims.

Thus, the invention provides a method for validating a version of wind turbine control software, such as an upgraded version of wind turbine control software. In the present context the term 'wind turbine control software' should be interpreted to mean software which is running on a wind turbine controller or a wind farm controller, and which is applied for controlling the wind turbine or the wind farm.

In the method according to the invention, a first version of the wind turbine control software is initially running on a controller for controlling operation of a wind turbine or a wind farm. In the present context, the term 'wind farm' should be interpreted to mean a group of a plurality of wind turbines sharing infrastructure for power transmission to a power grid. The wind turbines of the wind farm may be arranged at a geographical site, i.e. a wind farm site.

Thus, the controller may be a wind turbine controller which controls operation of a single wind turbine, or it may be a wind farm controller, sometimes referred to as a power plant controller (PPC), which handles the overall control of the wind turbines of a wind farm, e.g. in order to ensure that the wind farm as such fulfils certain requirements towards the power grid.

Next, a second version of the wind turbine control software, e.g. an upgraded version of the wind turbine control software, is installed on the controller. The first version of the wind turbine control software remains installed on the controller.

Once the second version of the wind turbine control software has been installed on the controller, a test period is initiated. To this end, the first version of the wind turbine control software and the second version of the wind turbine control software are running simultaneously on the controller. This is performed by applying identical control input to the first version of the wind turbine control software and to the second version of the wind turbine control software. In response to the received control input, the first version of the wind turbine control software, as well as the second version of the wind turbine control software generates control output, exactly as if they were each applied for controlling the wind turbine or the wind farm.

Since the first version of the wind turbine control software and the second version of the wind turbine control software are running simultaneously on the controller, and receive identical control input, it is ensured that they run under exactly identical operating conditions. Thereby the control output generated by the two versions of the wind turbine control software are directly comparable. This will be described in further detail below.

However, in order to avoid conflicts in the control of the wind turbine or wind farm, the wind turbine or wind farm is controlled by means of the controller and based on the control output generated by the first version of the wind turbine control software. Thereby it is also ensured that, during the test period, the wind turbine or wind farm is controlled by means of wind turbine control software which has been duly validated, and which would have been applied if no test was taking place.

Thus, during the test period, the wind turbine or wind farm is controlled exactly in the manner which was applied before the second version of the wind turbine control software was installed, i.e. based on the control output generated by the first version of the wind turbine control software. Accordingly, the control output generated by the second version of the wind turbine control is merely stored, and not applied for the actual control of the wind turbine or wind farm. Thus, no production loss is introduced during the test period, and it is ensured that all requirements, e.g. towards the power grid, are fulfilled, because the wind turbine or wind farm is controlled by means of duly validated wind turbine control software.

Next, a comparison is performed between the control output generated by the first version of the wind turbine control software and by the second version of the wind turbine control software, during a time interval. As described above, the control output generated by the two versions of the wind turbine control software are readily comparable, since they have been generated under exactly identical operating conditions. Thereby the comparison can reveal whether or not the second version of the wind turbine control software performs at least as well as the first version of the wind turbine control software. Furthermore, the comparison can also reveal whether or not the second version of the wind turbine control software generates expected control output in certain specified situations, such as certain grid events, certain wind conditions, etc. In particular, it can be revealed whether or not the second version of the wind turbine control software complies with grid code requirements, at least to the same extent as the first version of the wind turbine control software.

The time interval may be a fixed time interval, or it may be defined by the occurrence of one or more specified events. This will be described in further detail below.

Finally, the second version of the wind turbine control software is validated, based on the comparison.

Accordingly, the validation of the second version of the wind turbine control software is performed in a manner which reliably ensures that the second version of the wind turbine control software performs at least as well as the first version of the wind turbine control software, due to the simultaneously running of the two versions of the wind turbine control software on the controller. Furthermore, this is obtained without having to control any wind turbines by means of the second version of the wind turbine control software during the test period, and thereby without risking production loss or undesired behaviour of the wind turbine or wind farm during the test period. Finally, the validation may be performed automatically or semi-automatically, and thereby with no or only limited manual handling being required.

The method may further comprise the steps of, upon validation of the second version of the wind turbine control software, subsequently controlling the wind turbine or wind farm based on the control output generated by the second version of the wind turbine control software.

According to this embodiment, once the second version of the wind turbine control software has been validated, it is considered safe to apply the second version of the wind turbine control software for the actual control of the wind turbine or wind farm. Therefore, when this is the case, the second version of the wind turbine control software replaces the first version of the wind turbine control software, and the wind turbine or wind farm is, accordingly, subsequently controlled based on the control output generated by the second version of the wind turbine control software.

Furthermore, once the second version of the wind turbine control software has replaced the first version of the wind turbine control software, the first version of the wind turbine control software may be disabled and/or removed from the controller.

The step of validating the second version of the wind turbine control software may comprise validating the second version of the wind turbine control software in the case that a difference between the control output generated by the first version of the wind turbine control software and the control output generated by the second version of the wind turbine control software does not exceed a predefined threshold value during the time interval.

According to this embodiment, the step of validating the second version of the wind turbine control software includes a direct comparison between the control output generated by the respective two versions of the wind turbine control software, for the entire time interval, or at least for a significant part of the time interval. More particularly, it is investigated whether or not the two versions of the wind turbine control software react in an identical, or at least a similar, manner in response to the received control input and the prevailing operating conditions, in the sense that the control output generated by the two versions of the wind turbine control software are identical, at least up to a certain margin defined by the predefined threshold value.

If this is the case, it may be assumed that changes performed in the wind turbine control software from the first version to the second version have not affected the fundamental manner in which the wind turbine or wind farm is controlled, and that it is therefore safe to implement the new version of the wind turbine control software. For instance, it may be assumed that the second version of the wind turbine control software will fulfil any requirements, certifications, etc., which were fulfilled by the first version of the wind turbine control software. Therefore the second version of the wind turbine control software can be implemented without requiring a new or separate certification or approval process.

According to this embodiment, the time interval may be defined as a time period with a predefined length.

Alternatively or additionally, the step of validating the second version of the wind turbine control software may comprise validating the second version of the wind turbine control software in the case that the control output generated by the second version of the wind turbine control software corresponds to the control output generated by the first version of the wind turbine control software during one or more predefined grid events.

According to this embodiment, the comparison between the control output generated by the first version of the wind turbine control software and the control output generated by the second version of the wind turbine control software is particularly related to periods of time where one or more predefined grid events occur. The grid events could, e.g., include under voltage events, such as under voltage ride through (UVTR), over voltage events, such as over voltage ride through (OVRT), under-frequency events, over-frequency events, and/or any other suitable kind of grid event.

Grid codes normally specify how wind turbines and wind farms should react in the case that certain grid events, such as the grid events mentioned above, occur. It is therefore important that the wind turbine control software of a wind turbine or a wind farm reacts as expected, and in accordance with the grid code, during such grid events. Thus, according to this embodiment, it is ensured as part of the validation step that the second version of the wind turbine software is in fact in compliance with the grid code.

According to this embodiment, the time interval may run until all of the specified grid events have occurred, and thereby the length of the time interval may be variable, depending on when the grid events occur. Thus, the time interval may have a duration of days, weeks, several months, or even longer. However, it is thereby ensured that the second version of the wind turbine control software behaves as expected during all of the specified kinds of grid events, since this has been tested in real life.

Alternatively or additionally, the step of validating the second version of the wind turbine control software may comprise validating the second version of the wind turbine control software in the case that the control output generated by the second version of the wind turbine control software corresponds to the control output generated by the first version of the wind turbine control software during one or more predefined operating conditions.

This embodiment is similar to the embodiment described above, related to grid events, in the sense that the comparison between the control output generated by the first version of the wind turbine control software and the control output generated by the second version of the wind turbine control software is particularly related to periods of time where certain events occur. However, according to this embodiment, the occurring events are related to predefined operating conditions, rather than to conditions of the power grid.

The predefined operating conditions may, e.g., include climate conditions, such as wind speed, wind direction, turbulence conditions, etc. Alternatively or additionally, the predefined operating conditions may include values for operation commands, such as pause command, active power reference, reactive power reference, etc.

Control input regarding predefined operating conditions may be provided by a system operator or by the control system. For instance, if certain extreme operating condition do not occur within a reasonable test period, control input which simulate such extreme operating conditions may be generated and provided to the first and second versions of the wind turbine control software, and the provided control input may override the control input which represent the actually occurring operating conditions. Thereby it can be tested whether or not the second version of the wind turbine control software behaves as expected during relevant extreme operating conditions without waiting excessively long for the extreme operating conditions to occur.

Thus, according to this embodiment it is ensured that the second version of the wind turbine control software behaves as expected, and in a prescribed manner, during certain predefined operating conditions, such as specific wind directions, specific wind speeds, specific turbulence conditions, etc.

According to this embodiment, the time interval may also have a variable duration, similarly to the embodiment described above.

According to one embodiment, a comparison between the control outputs throughout the time interval as well as a comparison during grid events and/or during certain operating conditions may be performed. In this case, a larger difference between the generated control outputs may be accepted when no grid events and/or predefined operating conditions occur than during grid events and/or predefined operating conditions. In other words, the behaviour of the second version of the wind turbine control software during grid events and/or predefined operating conditions may be considered more relevant or more important than the behaviour during periods without grid events and/or predefined operating conditions.

The step of comparing the control output generated by the first version of the wind turbine control software and by the second version of the wind turbine control software may comprise performing a weighted comparison.

According to this embodiment, certain parts of the time interval, during which the control outputs generated by the two versions of the wind turbine control software are compared, are considered more important or relevant than other parts of the time interval. This may be due to the fact that it is considered particularly important that the second version of the wind turbine control software behaves in an expected and/or prescribed manner under some specified conditions. For instance, a higher weight may be assigned to time periods corresponding to critical situations or events, such as certain grid events, high wind speeds, high turbulence level, certain wind directions, etc.

The control input may include sensor data related to the wind turbine or wind farm being controlled and/or to a power grid which the wind turbine or wind farm is connected to.

Sensor data related to the wind turbine or wind farm being controlled may, e.g., include power output of the wind turbine or wind farm, load measurements, temperature measurements, vibration measurements, etc. The sensor data related to the wind turbine or wind farm may, thus, include sensor data which is normally applied in a feedback control loop for controlling a wind turbine or a wind farm.

Sensor data related to the power grid may, e.g., include measurements related to voltage, frequency, etc. The sensor data related to the power grid may, e.g., reveal whether or not a grid event is occurring.

The step of controlling the wind turbine or wind farm may be performed by means of an open-loop control strategy.

In the present context the term 'open-loop control strategy' should be interpreted to mean a control strategy which does not apply a feedback loop in which an error signal between a measured value and a corresponding setpoint or reference value is considered. Open-loop control strategies may also be referred to as 'feedforward control strategies'.

One example of an open-loop control strategy is a control strategy based on control input related to the power grid. Thus, this embodiment is well suited for ensuring that the second version of the wind turbine control software is in compliance with power grid requirements, such as a grid code.

As an alternative, the step of controlling the wind turbine or wind farm may be performed by means of a closed-loop control strategy, or a feedback control strategy. One advantage of applying a closed-loop control strategy is that the comparison between the control outputs generated by the respective two versions of the wind turbine control software can be performed strictly synchronously in time.

The controller may be a wind turbine controller. According to this embodiment, the wind turbine control software is for controlling a single wind turbine.

Alternatively, the controller may be a power plant controller (PPC). According to this embodiment, the wind turbine control software is for controlling a wind farm.

### BRIEF DESCRIPTION OF THE DRAWINGS

The invention will now be described in further detail with reference to the accompanying drawings in which
Fig. 1 illustrates a prior art control loop,
Fig. 2 illustrates a control loop applied in a method according to an embodiment of the invention,
Fig. 3 illustrates a method according to a first embodiment of the invention,
Fig. 4 illustrates a method according to a second embodiment of the invention, and
Fig. 5 is a flow chart illustrating a method according to an embodiment of the invention.

### DETAILED DESCRIPTION OF THE DRAWINGS

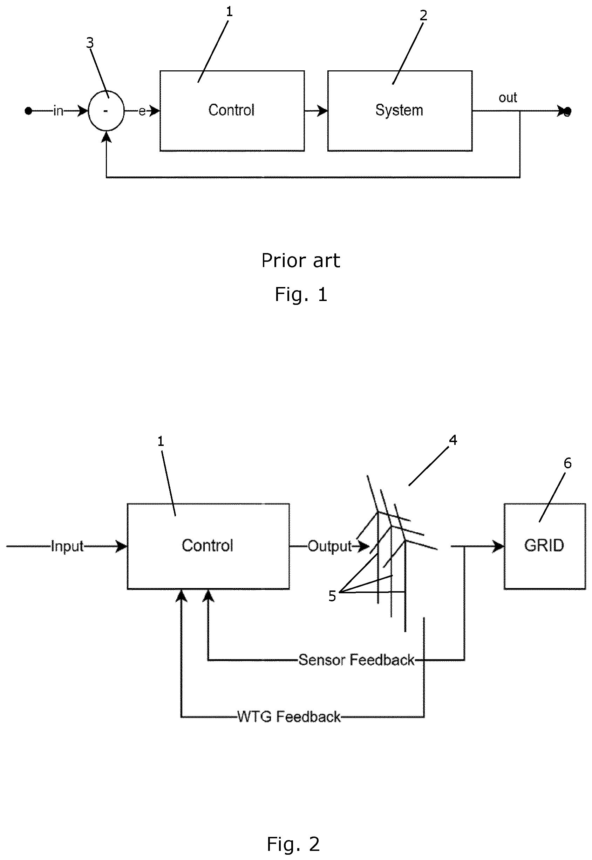

Fig. 1 illustrates a prior art control loop, in which a controller 1 controls a system 2, e.g. in the form of a wind turbine or a wind farm. A control input, which may include setpoints or reference values for one or more control parameters, is supplied to a subtraction unit 3. Furthermore, measurements of the relevant control parameter(s) are also supplied to the subtraction unit 3. The subtraction unit 3 generates an error signal, e, based on the received input, the error signal, e, representing the difference between a setpoint and an actual measured value of a relevant control parameter.

The error signal, e, is supplied to the controller 1, and the controller 1 generates a control output for the system 2, based on the error signal, e, and in order to ensure that the control parameter approaches the setpoint, i.e. in order to minimise the error signal, e.

The system 2 is then operated in accordance with the control output, while continuously measuring the relevant control parameters and supplying these to the subtraction unit 3.

Thus, the control loop illustrated in Fig. 1 is a feedback control loop.

Fig. 2 illustrates a control loop applied in a method according to an embodiment of the invention. A controller 1 is arranged to control a wind farm 4 comprising a plurality of wind turbines 5. The wind farm 4 is connected to a power grid 6, and thereby power produced by the wind turbines 5 of the wind farm 4 is supplied to the power grid 6.

The controller 1 receives control input in the form of user input, sensor feedback from the power grid 6 and sensor feedback from the wind turbines 5 of the wind farm 4. Based thereon, wind turbine control software installed on the controller 1 generates control output for the wind farm 4, including control output for the individual wind turbines 5 of the wind farm 4.

The control loop illustrated in Fig. 2 represents an open-loop control strategy, at least with respect to the sensor feedback from the power grid 6, in the sense that the error-based control strategy described above with reference to Fig. 1 is not applied. Instead, when the sensor feedback from the power grid 6 indicates that a grid event, e.g. a frequency deviation or a voltage deviation, is occurring, then a certain control output is expected, which causes the wind farm 4 to behave in an appropriate manner in order to adapt to the detected grid event. The expected control output is normally specified by the grid code.

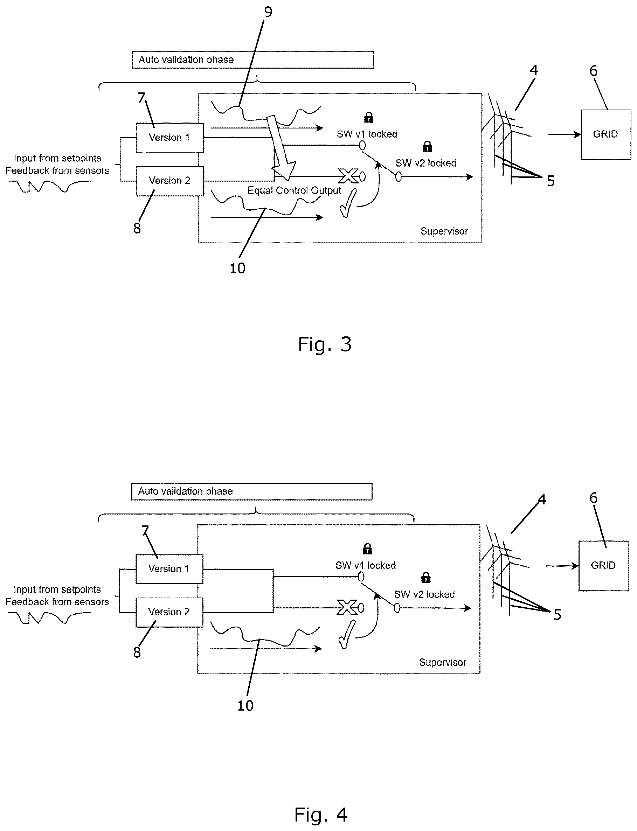

The controller 1 is configured to have two versions of the wind turbine control software running thereon simultaneously, in order to allow a second version of the wind turbine control software to be validated while the wind farm 4 is controlled based on control output generated by a first version of the wind turbine control software. This will be described in further detail below with reference to Figs. 3 and 4.

Fig. 3 illustrates a method according to a first embodiment of the invention. A first version 7 and a second version 8 of wind turbine control software are running simultaneously on a controller. Identical control input is supplied to the first version 7 of the wind turbine control software and to the second version 8 of the wind turbine control software.

Based on the received control input, the first version 7 of the wind turbine control software generates a first control output 9, and the second version of the wind turbine control software generates a second control output 10. The wind farm 4 is controlled based on the first control output 9, i.e. based on the control output generated by the first version 7 of the wind turbine control software. The first version 7 of the wind turbine control software has already been validated and certified, and therefore it is hereby ensured that the wind farm 4 is controlled in accordance with the certification, notably in accordance with the grid code of the power grid 6.

During operation of the wind farm 4 as described above, the first control output 9 and the second control output 10 are compared. This takes place within a specified time interval, which may be of a predefined duration, or which may end when a number of specified events, such as grid events or certain operating conditions, have occurred. More specifically, it is investigated whether or not the second control output 10 corresponds to the first control output 9, at least within a specified margin. This may include investigating whether or not a difference between the first control output 9 and the second control output 10 remains below a predefined threshold value throughout the time interval.

In the case that the comparison reveals that the second control output 10 corresponds to the first control output 9 to a sufficient extent, it may be concluded that the second version 8 of the wind turbine control software is in compliance with any requirements, such as requirements related to grid code, certification, etc., which applied to the first version 7 of the wind turbine control software. Therefore, when this is the case, the second version 8 of the wind turbine control software is validated.

Once the second version 8 of the wind turbine control software has been validated, the second version 8 of the wind turbine control software replaces the first version 7 of the wind turbine control software, in the sense that the wind farm 4 is subsequently controlled based on the second control output 10. Furthermore, the first version 7 of the wind turbine control software may be disabled and/or removed from the controller.

Fig. 4 illustrates a method according to a second embodiment of the invention. The embodiment of Fig. 4 is very similar to the embodiment of Fig. 3, and it will therefore not be described in detail here.

However, in the embodiment of Fig. 4, the second control output 10 is validated towards an expected control output, specified by the grid code, during a number of specified grid events. The first version 7 of the wind turbine control software is known to exhibit this specified behaviour, and therefore comparing the first control output 9 and the second control output 10 during a grid event is equivalent to comparing the second control output 10 to a control output specified by the grid code, related to the grid event.

Thus, in the embodiment illustrated in Fig. 4, it is particularly ensured that the second version 8 of the wind turbine control software fulfils requirements specified by the grid code, before the second version 8 of the wind turbine control software is validated.

The comparison takes place during a time interval which starts when the second version 8 of the wind turbine control software has been installed on the controller, and has started running, and ends when each of a specified number of grid events has occurred.

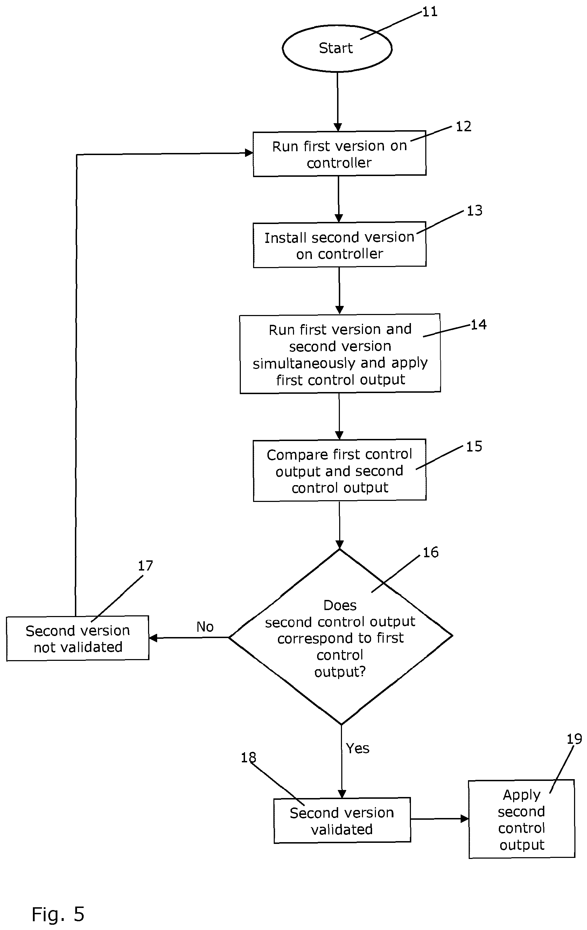

Fig. 5 is a flow chart illustrating a method according to an embodiment of the invention. The process is started at step 11. At step 12, a first version of wind turbine control software is running on a controller for controlling operation of a wind turbine or a wind farm.

At step 13, a second version of the wind turbine control software is installed on the controller, in addition to the first version of the wind turbine control software.

At step 14, the first version of the wind turbine control software and the second version of the wind turbine control software are running simultaneously on the controller, in such a manner that the first version of the wind turbine control software and the second version of the wind turbine control software receive identical control input, and each of the first and second versions of the wind turbine control software generates respective control output, based on the received control input. During this, the wind turbine or wind farm is controlled based on the control output generated by the first version of the wind turbine control software.

At step 15, the control output generated by the first version of the wind turbine control software and the control output generated by the second version of the wind turbine control software are compared, and at step 16 it is investigated whether or not the control output generated by the second version of the wind turbine control software corresponds to the control output generated by the first version of the wind turbine control software. This could, e.g., include that a difference between the control outputs generated by the two respective versions of the wind turbine control software does not exceed a predefined threshold value, and/or that the second version of the wind turbine control software reacts in a specified manner during grid events and/or during other specified operating conditions.

If the investigation at step 16 reveals that the control output generated by the second version of the wind turbine control software does not correspond to the control output of the first version of the wind turbine control software, then the process is forwarded to step 17, and the second version of the wind turbine control software is not validated. The process is then returned to step 12, where the first version of the wind turbine control software is running on the controller, and the wind turbine or wind farm is controlled based on the control output generated by the first version of the wind turbine control software. This continues until a new version of the wind turbine software is ready for validation, at which time the process is once again forwarded to step 13.

In the case that the investigation at step 16 reveals that the control output generated by the second version of the wind turbine control software does correspond to the control output generated by the first version of the wind turbine control software, then it may be assumed that the second version of the wind turbine control software fulfils relevant requirements which were also fulfilled by the first version of the wind turbine control software. Therefore, in this case the process is forwarded to step 18, where the second version of the wind turbine control software is validated. Finally, at step 19, the second version of the wind turbine control software replaces the first version of the wind turbine control software, in the sense that the wind turbine or wind farm is subsequently controlled based on the control output generated by the second version of the wind turbine control software.

## Claims

1. A method for validating a version of wind turbine control software, **characterized in that** the method comprises the steps of:
- running a first version (7) of the wind turbine control software on a controller (1) for controlling operation of a wind turbine (5) or a wind farm (4),
- installing a second version (8) of the wind turbine control software on the controller (1), in addition to the first version (7) of the wind turbine control software,
- simultaneously running the first version (7) of the wind turbine control software and the second version (8) of the wind turbine control software on the controller (1), under identical operating conditions and by applying identical control input to the first version (7) of the wind turbine control software and to the second version (8) of the wind turbine control software, and the first (7) and the second (8) versions of the wind turbine control software each generating control output (9, 10), based on the received control input, as if they were each applied for controlling the wind turbine (5) or the wind farm (4),
- controlling the wind turbine (5) or wind farm (4) by means of the controller (1) and based on the control output (9) generated by the first version (7) of the wind turbine control software, and applying a feedback control loop,
- storing the control output (10) generated by the second version (8) of the wind turbine control software without applying it for actual control of the wind turbine (5) or wind farm (4),
- comparing the control output (9, 10) generated by the first version (7) of the wind turbine control software and by the second version (8) of the wind turbine control software, during a time interval, and
- validating the second version (8) of the wind turbine control software, based on the comparison,
wherein the control input includes sensor data related to the wind turbine (5) or wind farm (4) being controlled, in the form of power output of the wind turbine or wind farm, load measurements, temperature measurements and/or vibration measurements applied in the feedback control loop for controlling the wind turbine or wind farm.

2. A method according to claim 1, further comprising the steps of, upon validation of the second version (8) of the wind turbine control software, subsequently controlling the wind turbine (5) or wind farm (4) based on the control output (10) generated by the second version (8) of the wind turbine control software.

3. A method according to claim 1 or 2, wherein the step of validating the second version (8) of the wind turbine control software comprises validating the second version (8) of the wind turbine control software in the case that a difference between the control output (9) generated by the first version (7) of the wind turbine control software and the control output (10) generated by the second version (8) of the wind turbine control software does not exceed a predefined threshold value during the time interval.

4. A method according to any of the preceding claims, wherein the step of validating the second version (8) of the wind turbine control software comprises validating the second version (8) of the wind turbine control software in the case that the control output (10) generated by the second version (8) of the wind turbine control software corresponds to the control output (9) generated by the first version (7) of the wind turbine control software during one or more predefined grid events.

5. A method according to any of the preceding claims, wherein the step of validating the second version (8) of the wind turbine control software comprises validating the second version (8) of the wind turbine control software in the case that the control output (10) generated by the second version (8) of the wind turbine control software corresponds to the control output (9) generated by the first version (7) of the wind turbine control software during one or more predefined operating conditions.

6. A method according to any of the preceding claims, wherein the step of comparing the control output (9, 10) generated by the first version (7) of the wind turbine control software and by the second version (8) of the wind turbine control software comprises performing a weighted comparison.

7. A method according to any of the preceding claims, wherein the control input further includes sensor data related to a power grid (6) which the wind turbine (5) or wind farm (4) is connected to.

8. A method according to any of the preceding claims, wherein the step of controlling the wind turbine (5) or wind farm (4) is performed by means of an open-loop control strategy.

9. A method according to any of the preceding claims, wherein the controller (1) is a wind turbine controller.

10. A method according to any of claims 1-8, wherein the controller (1) is a power plant controller (PPC).

## Patentansprüche

1. Verfahren zum Validieren einer Version einer Windkraftanlagen-Steuerungssoftware, **dadurch gekennzeichnet, dass** das Verfahren die folgenden Schritte umfasst:
- Ausführen einer ersten Version (7) der Windkraftanlagen-Steuerungssoftware auf einer Steuereinheit (1) zum Steuern eines Betriebs einer Windkraftanlage (5) oder eines Windparks (4),
- Installieren einer zweiten Version (8) der Windkraftanlagen-Steuerungssoftware auf der Steuereinheit (1), zusätzlich zur ersten Version (7) der Windkraftanlagen-Steuerungssoftware,
- gleichzeitiges Ausführen der ersten Version (7) der Windkraftanlagen-Steuerungssoftware und der zweiten Version (8) der Windkraftanlagen-Steuerungssoftware auf der Steuereinheit (1) unter identischen Betriebsbedingungen und durch Anwenden identischer Steuerungseingaben auf die erste Version (7) der Windkraftanlagen-Steuerungssoftware und auf die zweite Version (8) der Windkraftanlagen-Steuerungssoftware, und wobei die erste (7) und die zweite (8) Version der Windkraftanlagen-Steuerungssoftware jeweils Steuerungsausgaben (9, 10) basierend auf den empfangenen Steuerungseingaben erzeugen, als ob sie jeweils zur Steuerung der Windkraftanlage (5) oder des Windparks (4) angewendet würden,
- Steuern der Windkraftanlage (5) oder des Windparks (4) mittels der Steuereinheit (1) und basierend auf der von der ersten Version (7) der Windkraftanlagen-Steuerungssoftware erzeugten Steuerungsausgabe (9) und Anwenden eines Rückkopplungsregelkreises,
- Speichern der von der zweiten Version (8) der Windkraftanlagen-Steuerungssoftware erzeugten Steuerungsausgabe (10), ohne diese zur tatsächlichen Steuerung der Windkraftanlage (5) oder des Windparks (4) anzuwenden,
- Vergleichen der von der ersten Version (7) der Windkraftanlagen-Steuerungssoftware und der zweiten Version (8) der Windkraftanlagen-Steuerungssoftware während eines Zeitintervalls erzeugten Steuerungsausgaben (9, 10) und
- Validieren der zweiten Version (8) der Windkraftanlagen-Steuerungssoftware basierend auf dem Vergleich,
wobei die Steuerungseingabe Sensordaten einschließt, die sich auf die zu steuernde Windkraftanlage (5) oder den zu steuernden Windpark (4) beziehen, in Form von Ausgangsleistung der Windkraftanlage oder des Windparks, Lastmessungen, Temperaturmessungen und/oder Schwingungsmessungen, die im Rückkopplungsregelkreis zur Steuerung der Windkraftanlage oder des Windparks angewendet werden.

2. Verfahren nach Anspruch 1, das weiter die Schritte umfasst, nach Validierung der zweiten Version (8) der Windkraftanlagen-Steuerungssoftware die Windkraftanlage (5) oder den Windpark (4) anschließend basierend auf der von der zweiten Version (8) der Windkraftanlagen-Steuerungssoftware erzeugten Steuerungsausgabe (10) zu steuern.

3. Verfahren nach Anspruch 1 oder 2, wobei der Schritt des Validierens der zweiten Version (8) der Windkraftanlagen-Steuerungssoftware Validieren der zweiten Version (8) der Windkraftanlagen-Steuerungssoftware für den Fall umfasst, dass eine Differenz zwischen der von der ersten Version (7) der Windkraftanlagen-Steuerungssoftware erzeugten Steuerungsausgabe (9) und der von der zweiten Version (8) der Windkraftanlagen-Steuerungssoftware erzeugten Steuerungsausgabe (10) während des Zeitintervalls einen vordefinierten Schwellenwert nicht überschreitet.

4. Verfahren nach einem der vorstehenden Ansprüche, wobei der Schritt des Validierens der zweiten Version (8) der Windkraftanlagen-Steuerungssoftware Validieren der zweiten Version (8) der Windkraftanlagen-Steuerungssoftware für den Fall umfasst, dass die von der zweiten Version (8) der Windkraftanlagen-Steuerungssoftware erzeugte Steuerungsausgabe (10) der von der ersten Version (7) der Windkraftanlagen-Steuerungssoftware während eines oder mehrerer vordefinierter Netzwerkereignisse erzeugten Steuerungsausgabe (9) entspricht.

5. Verfahren nach einem der vorstehenden Ansprüche, wobei der Schritt des Validierens der zweiten Version (8) der Windkraftanlagen-Steuerungssoftware Validieren der zweiten Version (8) der Windkraftanlagen-Steuerungssoftware für den Fall umfasst, dass die von der zweiten Version (8) der Windkraftanlagen-Steuerungssoftware erzeugte Steuerungsausgabe (10) der von der ersten Version (7) der Windkraftanlagen-Steuerungssoftware während einer oder mehrerer vordefinierter Betriebsbedingungen erzeugten Steuerungsausgabe (9) entspricht.

6. Verfahren nach einem der vorstehenden Ansprüche, wobei der Schritt des Vergleichens der von der ersten Version (7) der Windkraftanlagen-Steuerungssoftware und der von der zweiten Version (8) der Windkraftanlagen-Steuerungssoftware erzeugten Steuerungsausgabe (9, 10) Durchführen eines gewichteten Vergleichs umfasst.

7. Verfahren nach einem der vorstehenden Ansprüche, wobei die Steuerungseingabe weiter Sensordaten einschließt, die sich auf ein Stromnetz (6) beziehen, an das die Windkraftanlage (5) oder der Windpark (4) angeschlossen ist.

8. Verfahren nach einem der vorstehenden Ansprüche, wobei der Schritt des Steuerns der Windkraftanlage (5) oder des Windparks (4) mittels einer Strategie eines offenen Regelkreises durchgeführt wird.

9. Verfahren nach einem der vorstehenden Ansprüche, wobei es sich bei der Steuereinheit (1) um eine Windkraftanlagensteuerung handelt.

10. Verfahren nach einem der Ansprüche 1-8, wobei die Steuereinheit (1) eine Parksteuervorrichtung (PPC) ist.

## Revendications

1. Procédé de validation d'une version d'un logiciel de commande d'éolienne, **caractérisé en ce que** le procédé comprend les étapes consistant à :
- exécuter une première version (7) du logiciel de commande d'éolienne sur un dispositif de commande (1) pour commander le fonctionnement d'une éolienne (5) ou d'un parc éolien (4),
- installer une seconde version (8) du logiciel de commande d'éolienne sur le dispositif de commande (1), en plus de la première version (7) du logiciel de commande d'éolienne,
- exécuter simultanément la première version (7) du logiciel de commande d'éolienne et la seconde version (8) du logiciel de commande d'éolienne sur le dispositif de commande (1), dans des conditions de fonctionnement identiques et en appliquant une entrée de commande identique à la première version (7) du logiciel de commande d'éolienne et à la seconde version (8) du logiciel de commande d'éolienne, et les première (7) et seconde (8) versions du logiciel de commande d'éolienne générant chacune une sortie de commande (9, 10), sur la base de l'entrée de commande reçue, comme si elles étaient chacune appliquées pour commander l'éolienne (5) ou le parc éolien (4),
- commander l'éolienne (5) ou le parc éolien (4) au moyen du dispositif de commande (1) et sur la base de la sortie de commande (9) générée par la première version (7) du logiciel de commande d'éolienne, et appliquer une boucle de commande de rétroaction,
- stocker la sortie de commande (10) générée par la seconde version (8) du logiciel de commande d'éolienne sans l'appliquer pour la commande réelle de l'éolienne (5) ou du parc éolien (4),
- comparer la sortie de commande (9, 10) générée par la première version (7) du logiciel de commande d'éolienne et par la seconde version (8) du logiciel de commande d'éolienne, pendant un intervalle de temps, et
- valider la seconde version (8) du logiciel de commande d'éolienne, sur la base de la comparaison,
dans lequel l'entrée de commande inclut des données de capteur liées à l'éolienne (5) ou au parc éolien (4) étant commandé, sous la forme de la sortie de puissance de l'éolienne ou du parc éolien, de mesures de charge, de mesures de température et/ou mesures de vibrations appliquées dans la boucle de commande de rétroaction pour commander l'éolienne ou le parc éolien.

2. Procédé selon la revendication 1, comprenant en outre les étapes consistant, lors de la validation de la seconde version (8) du logiciel de commande d'éolienne, à commander ultérieurement l'éolienne (5) ou le parc éolien (4) sur la base de la sortie de commande (10) générée par la seconde version (8) du logiciel de commande d'éolienne.

3. Procédé selon la revendication 1 ou 2, dans lequel l'étape de validation de la seconde version (8) du logiciel de commande d'éolienne comprend la validation de la seconde version (8) du logiciel de commande d'éolienne dans le cas où une différence entre la sortie de commande (9) générée par la première version (7) du logiciel de commande d'éolienne et la sortie de commande (10) générée par la seconde version (8) du logiciel de commande d'éolienne ne dépasse pas une valeur seuil prédéfinie pendant l'intervalle de temps.

4. Procédé selon l'une quelconque des revendications précédentes, dans lequel l'étape de validation de la seconde version (8) du logiciel de commande d'éolienne comprend la validation de la seconde version (8) du logiciel de commande d'éolienne dans le cas où la sortie de commande (10) générée par la seconde version (8) du logiciel de commande d'éolienne correspond à la sortie de commande (9) générée par la première version (7) du logiciel de commande d'éolienne pendant un ou plusieurs événements de réseau prédéfinis.

5. Procédé selon l'une quelconque des revendications précédentes, dans lequel l'étape de validation de la seconde version (8) du logiciel de commande d'éolienne comprend la validation de la seconde version (8) du logiciel de commande d'éolienne dans le cas où la sortie de commande (10) générée par la seconde version (8) du logiciel de commande d'éolienne correspond à la sortie de commande (9) générée par la première version (7) du logiciel de commande d'éolienne pendant une ou plusieurs conditions de fonctionnement prédéfinies.

6. Procédé selon l'une quelconque des revendications précédentes, dans lequel l'étape de comparaison de la sortie de commande (9, 10) générée par la première version (7) du logiciel de commande d'éolienne et par la seconde version (8) du logiciel de commande d'éolienne comprend la réalisation d'une comparaison pondérée.

7. Procédé selon l'une quelconque des revendications précédentes, dans lequel l'entrée de commande inclut en outre des données de capteur liées à un réseau électrique (6) auquel l'éolienne (5) ou le parc éolien (4) est raccordé.

8. Procédé selon l'une quelconque des revendications précédentes, dans lequel l'étape consistant à commander l'éolienne (5) ou le parc éolien (4) est réalisée au moyen d'une stratégie de commande en boucle ouverte.

9. Procédé selon l'une quelconque des revendications précédentes, dans lequel le dispositif de commande (1) est un dispositif de commande d'éolienne.

10. Procédé selon l'une quelconque des revendications 1-8, dans lequel le dispositif de commande (1) est un dispositif de commande de centrale électrique (PPC).
